# EUROPÄISCHE PATENTSCHRIFT

(11) **EP 2 147 234 B1**
(45) Veröffentlichungstag und Bekanntmachung des Hinweises auf die Patenterteilung: **17.11.2010**
(21) Anmeldenummer: 08734987.4
(22) Anmeldetag: 03.04.2008
(51) Int. Cl.: F16H 57/02, F16H 57/04

(54) **LAGERDECKEL, GETRIEBE, VERFAHREN UND BAUREIHE**
BEARING COVER, GEARBOX, METHOD, AND SERIES
CHAPEAU DE PALIER, TRANSMISSION, PROCÉDÉ ET GAMME DE FABRICATION

(30) Priorität: 13.04.2007 DE 102007017874
(43) Veröffentlichungstag der Anmeldung: 27.01.2010
(73) Patentinhaber: SEW-EURODRIVE GmbH & Co. KG, 76646 Bruchsal (DE)
(72) Erfinder: HESS, Andreas, 76467 Bietigheim (DE); MEGERLE, Jürgen, 76694 Forst (DE)
(74) Vertreter: Tüngler, Eberhard
(86) Internationale Anmeldenummer: PCT/EP2008/002646
(87) Internationale Veröffentlichungsnummer: WO 2008/125224

(56) Entgegenhaltungen:
- DE-A1- 10 249 175
- DE-A1-102005 019 188

## Beschreibung

Die Erfindung betrifft einen Lagerdeckel, ein Getriebe, ein Verfahren und eine Baureihe.

Aus der gattungsgemäßen DE10 2005 019 188 A1 ist ein Gehäusedeckel für ein stufenloses Getriebe bekannt, bei welchem in einem Gehäusedeckelelement ein geschlossener Kanal vorgesehen ist, welcher an einem Ende nach außen durch das Gehäusedeckelelement einen Anschluss bildet und welcher an seinem anderen Ende In eine Ausbildung mit einer kreisringförmigen Gehäusedeckelschulter mündet.

Aus der DE 102 49 175 A1 ist eine Fahrzeugantriebseinheit bekannt, bei welcher ein als Zwischenwand eingesetzter Gehäusedeckel vorgesehen ist, in welchem ein geschlossener Öldurchgang als Bohrung ausgebildet ist, welcher Öl zu einem Lager leitet.

Der Erfindung liegt daher die Aufgabe zugrunde, eine Baureihe von Getrieben weiterzubilden unter Verbesserung der Standzeit und unter Verringerung der Fertigungskosten.

Erfindungsgemäß wird die Aufgabe bei dem Lagerdeckel nach den in Anspruch 1, bei dem Getriebe nach den in Anspruch 3, bei dem Verfahren nach den in Anspruch 7 und bei der Baureihe nach den in Anspruch 9 angegebenen Merkmalen gelöst.

Wichtige Merkmale der Erfindung eines Lagerdeckels sind in Anspruch 1 angegeben.

Bei einer vorteilhaften Ausgestaltung ist eine Symmetrieebene vorhanden, bezüglich derer der Lagerdeckel spiegelsymmetrisch ausgebildet ist, wobei die Symmetrieebene nicht durch die Ölnut verläuft.

Bei einer vorteilhaften Ausgestaltung umfasst jeder Mündungsbereich der Ölnut einen Abtropfvorsprung, wobei die Abtropfvorsprünge jeweils von ihrem jeweiligen Spiegelbild weg weisen, insbesondere zur Vermeidung eines Rückkriechens von Schmieröl in das Ende der Ölnut.

Bei einer vorteilhaften Ausgestaltung ist eine Ölnut zweiter Art vorgesehen, die in eine Aussparung mündet und durch welche die Symmetrieebene verläuft.

Bei einer vorteilhaften Ausgestaltung ist eine Ölnut dritter Art vorgesehen, die in eine Aussparung mündet und durch welche die Symmetrieebene nicht verläuft.

Bei einer vorteilhaften Ausgestaltung weist mindestens eine Aussparung zur teilweisen Abdeckung einer Lagerbohrung eine Öffnung auf, zur Durchführung einer Welle.

Bei einer vorteilhaften Ausgestaltung sind Mittel, insbesondere Sackbohrungen und eine Flanschfläche, vorgesehen zur Montage einer Rücklaufsperre.

Bei einer vorteilhaften Ausgestaltung sind Ölnuten und Bohrungen vorgesehen zum Anschluss der Ölausgänge einer Wellenendpumpe.

Wichtige Merkmale der Erfindung eines Getriebes mit Ölkreislauf sind in **Anspruch 3 angegeben**. Es kann vorgesehen sein, dass das Getriebe ein Gehäuse und mindestens ein Zahnrad umfasst, das auf einer Welle befestigt ist, wobei die Welle in einem Lager gelagert ist, wobei das Lager in einer Lagerbohrung angeordnet ist und durch einen Lagerdeckel verschlossen ist, wobei der Lagerdeckel eine Aussparung aufweist, welche die Lagerbohrung abdeckt, wobei eine Schmierölpumpe oder Mittel zum Auffangen von Schmieröl im Getriebeinneren vorgesehen sind, im Gehäuse eine Bohrung vorgesehen ist zur Durchleitung von aufgefangenem Schmieröl and den Lagerdeckel, im Lagerdeckel eine erste Ölnut vorgesehen ist, die mit der Gehäusewand einen Kanal bildet zur Durchleitung von Schmieröl aus der Bohrung an die Aussparung.

Bei einer vorteilhaften Ausgestaltung ist im Lagerdeckel eine zweite Ölnut vorgesehen, und im Gehäuse eine zweite Bohrung vorgesehen ist, wobei die zweite Ölnut die Aussparung mit der zweiten Bohrung zur Durchleitung von Schmieröl verbindet.

Bei einer vorteilhaften Ausgestaltung ist die zweite Ölnut so angeordnet und ausgebildet, dass sie als Überlauf für das über die erste Ölnut zugeführte Schmieröl verwendbar ist.

Bei einer vorteilhaften Ausgestaltung ist die zweite Ölnut so angeordnet und ausgebildet, dass sie in einer zweiten Bauform des Getriebes als Schmierölzuführung verwendbar ist.

Wichtige Merkmale der Erfindung eines Verfahrens zur Schmierung eines Lagers in einem Getriebe sind in Anspruch 7 angegeben.

Bei einer vorteilhaften Ausgestaltung ist der Lagerdeckel spiegelsymmetrisch ausgeführt, wobei das Spiegelbild der Ölnut als Überlauf der Lagerschmierung verwendet wird, indem überschüssiges Öl über die Ölnut und eine Bohrung im Gehäuse in den Getriebeinnenraum geleitet wird.

Wichtige Merkmale der Erfindung einer Baureihe von Getriebevarianten sind **in Anspruch 9 angegeben. Es kann vorgesehen sein**, dass jede Getriebevariante eine Anzahl von Stirnrad-Getriebestufen umfasst, deren Wellen in Lagern gelagert sind, die durch Lagerdeckel zumindest teilweise abgedeckt sind, wobei ein Lagerdeckel der ersten Stirnrad-Getriebestufe einer ersten Getriebevariante montierbar ist an die erste Stirnrad-Getriebestufe einer zweiten Getriebevariante, wenn die Achsabstände der beiden Stirnrad-Getriebestufen übereinstimmen, insbesondere der Lagerdeckel der eintreibenden Welle der jeweils ersten Stirnrad-Getriebestufe, wobei erster Getriebevariante und zweite Getriebevariante eine unterschiedliche Anzahl von Stirnrad-Getriebestufen aufweisen.

Bei einer vorteilhaften Ausgestaltung ist ein Lagerdeckel der letzten Stirnrad-Getriebestufe einer ersten Getriebevariante, insbesondere der Lagerdeckel der abtreibenden Welle, montierbar an die letzte Stirnrad-Getriebestufe einer zweiten Getriebevariante, wenn die Achsabstände der beiden Stirnrad-Getriebestufen übereinstimmen.

**Es kann vorgesehen sein**, dass jede Getriebevariante eine Anzahl von Stirnrad-Getriebestufen umfasst, deren Wellen in Lagern gelagert sind, die durch Lagerdeckel zumindest teilweise abgedeckt sind, wobei unterschiedliche Getriebevarianten mit unterschiedlicher Anzahl von Stirnrad-Getriebestufen einen identischen Lagerdeckel aufweisen, wobei die Getriebevarianten die Knoten eines Graphs definieren, wobei je zwei Knoten durch eine Kante verbunden sind, wenn die zugehörigen Getriebevarianten mindestens einen identischen Lagerdeckel aufweisen, wobei der Graph zusammenhängend ist.

Bei einer vorteilhaften Ausgestaltung weisen eine einstufige, eine zweistufige und eine dreistufige Getriebevariante einen identischen Lagerdeckel auf, insbesondere den Lagerdeckel der abtreibenden Welle.

Bei einer vorteilhaften Ausgestaltung weisen eine zweistufige und eine dreistufige Getriebevariante einen identischen Lagerdeckel auf, insbesondere einen Lagerdeckel der eintreibenden Welle, insbesondere wobei der Lagerdeckel zwei Wellenlager zumindest teilweise verschließt.

Bei einer vorteilhaften Ausgestaltung weisen jeweils eine einstufige, eine zweistufige und eine dreistufige Getriebevariante einen identischen Lagerdeckel auf, insbesondere den Lagerdeckel der abtreibenden Welle.

Bei einer vorteilhaften Ausgestaltung weisen jeweils eine zweistufige und eine dreistufige Getriebevariante einen identischen Lagerdeckel auf, insbesondere einen Lagerdeckel der eintreibenden Welle, insbesondere wobei der Lagerdeckel zwei Wellenlager zumindest teilweise verschließt.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

### Bezugszeichenliste

- 1: Lagerdeckel
- 2: Flanschfläche
- 3: Bohrung
- 4: Ausnehmung
- 5: Aussparung
- 6: Aussparung
- 7: Ölaufnahme
- 8: Ölnut
- 9: Vorsprung
- 10: Überlaufsperre
- 11: Abtropfhilfe
- 12: Überlaufsperre
- 13: Abtropfhilfe
- 14: Ölzufuhr
- 15: Ölüberlauf
- 16: Ölzufuhr
- 17: Ölüberlauf
- 18: Anlegekante
- 20: Lagerdeckel
- 30: Befestigungsbohrloch
- 31: Ölnut
- 32: Ölaustritt
- 33: Aussparung
- 34: Anlegekante
- 40: Aussparung
- 41: Nutöffnung
- 42: Ölanschluss
- 43: Zentrierhilfe
- 44: Nutöffnung
- 50-55: Deckelkombinationsvariante
- 56: Einzeldeckel
- 57: Doppeldeckel
- 58: Einzeldeckel

Die Erfindung wird nun anhand von Abbildungen näher erläutert:
Es zeigt
   - Figur 1 einen erfindungsgemäßen Lagerdeckel,
   - Figur 2 einen weiteren erfindungsgemäßen Lagerdeckel,
   - Figur 3 eine Draufsicht auf den Lagerdeckel aus Figur 2,
   - Figur 4 einen Schnitt durch den Lagerdeckel aus Figur 2,
   - Figur 5 die Kombination von Lagerdeckel zur Bildung einer Baureihe von Getrieben,
   - Figur 6 die Wiederverwendung von Lagerdeckeln bei der Baureihe von Getrieben nach Figur 5.

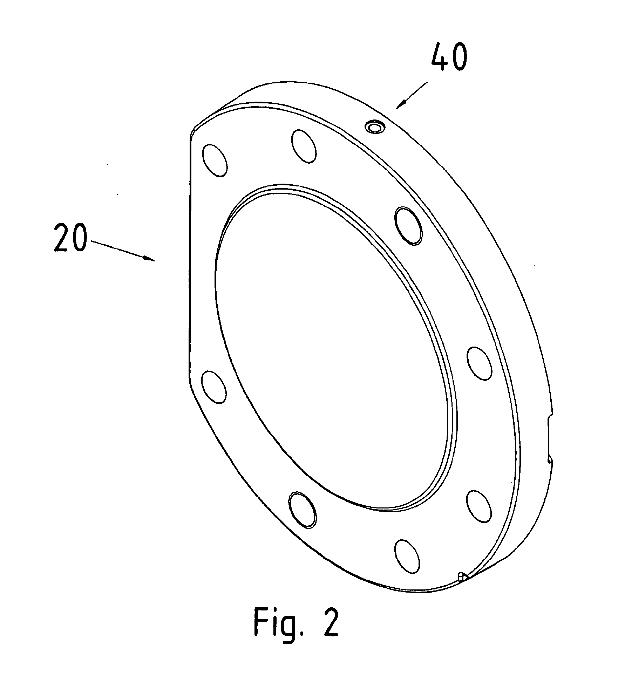

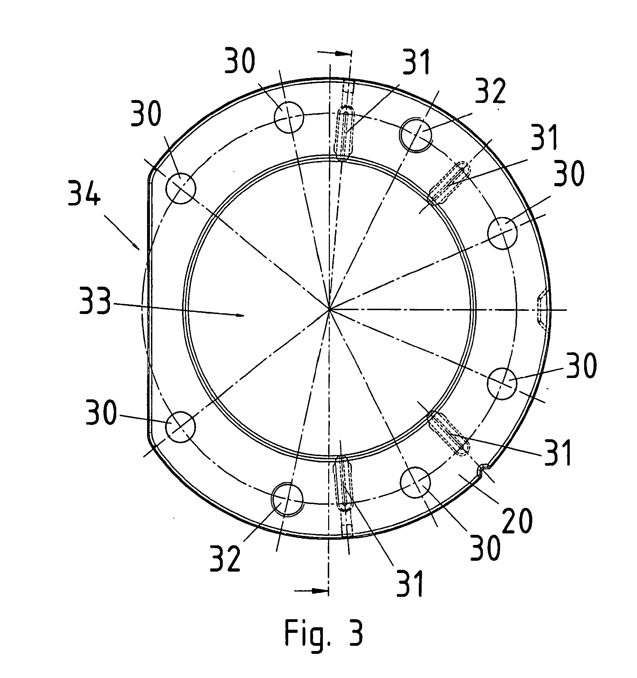

Figur 2 zeigt einen erfindungemäßen Lagerdeckel 20, Figur 3 diesen Lagerdeckel 20 in Draufsicht. Der Lagerdeckel 20 weist Befestigungsbohrlöcher 30 auf zur Befestigung an einem Getriebegehäuse. Der Lagerdeckel 20 weist ferner Ölaustritte 32 auf zum Anschluss eines externen Schmieröl-Verrohrungssystems. Auf der Unterseite des Lagerdeckels 20 sind Ölnuten 31 ausgebildet. Zwei Ölnuten 31 sind mit einem Ölanschlüssen 42 verbunden zur Entlüftung oder zum Anschluss eines externen Schmieröl-Verrohrungssystems. Die zwei Ölnuten ohne Ölanschluss 42 sind um einen Winkel versetzt angeordnet und somit als Überlauf nutzbar.

Der Lagerdeckel 20 weist weiterhin eine runde Außenkontur auf, in der eine Anlegekante 34 vorgesehen ist. Auf der Unterseite ist eine kuppelförmige Aussparung 33 eingebracht zur Abdeckung eines Lagers. In die runde Außenkontur ist weiterhin eine Kerbe eingebracht, die zur Positionierung des Lagerdeckels 20 beim Einbringen der Befestigungsbohrlöcher 30 verwendbar ist

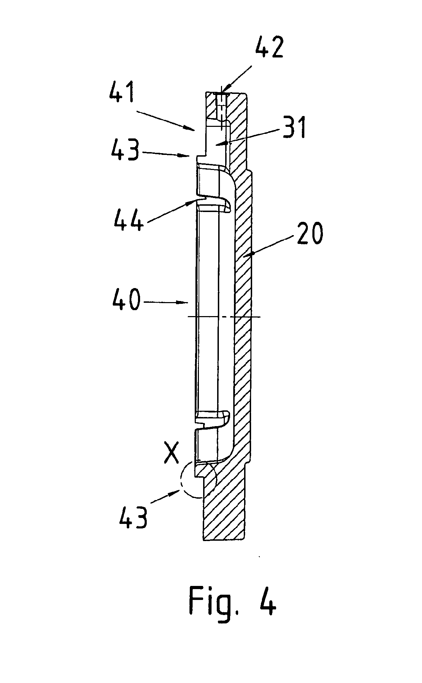

Figur 4 zeigt eine Schnittansicht des Lagerdeckels 20 entlang der in Figur 3 mit Pfeilen bezeichneten Linie. Der Lagerdeckel 20 ist zum Verschließen einer Lagerbohrung in einem Getriebegehäuse vorgesehen. Zur Materialreduktion ist eine Aussparung 40 ausgebildet, welche im montierten Zustand die Lagerbohrung überdeckt. Die Materialreduktion ist möglich, weil die volle Materialstärke des Lagerdeckels 20 nur im Bereich um die Befestigungsbohrlöcher 30 und zur Festlegung des Lagers in der Lagerbohrung benötigt wird. Eine ringförmig geformte Zentrierhilfe 43 erleichtert das Aufsetzen. In den Lagerdeckel 20 ist eine Ölnut 31 eingebracht, deren erstes Ende in eine Nutöffnung 41 mündet, während deren zweites Ende in die Aussparung 40 mündet. Im montierten Zustand ist die Nutöffnung 41 mit einer Bohrung im Getriebegehäuse zur Deckung gebracht, und Öl ist über den durch Ölnut und Getriebegehäuse gebildeten Kanal und die Aussparung an das Lager leitbar. Die Ölnut 31 ist weiter mit einem Ölanschluss 42 verbunden.

Wie in Figur 3 ersichtlich, weist der Lagerdeckel 20 weitere Ölnuten auf, die über Nutöffnungen 44 in die Aussparung 40 münden.

Bei einem weiteren Ausführungsbeispiel ist in den lagerdeckel 20 eine konzentrische Bohrung eingebracht zur Durchführung einer Welle.

Bei einem weiteren Ausführungsbeispiel sind auf der Außenseite des Lagerdeckes 20 Mittel zur Befestigung einer Rücklaufsperre vorgesehen.

Bei einem weiteren Ausführungsbeispiel sind auf der Außenseite des Lagerdeckes 20 Mittel zur Befestigung einer Wellenpumpe vorgesehen.

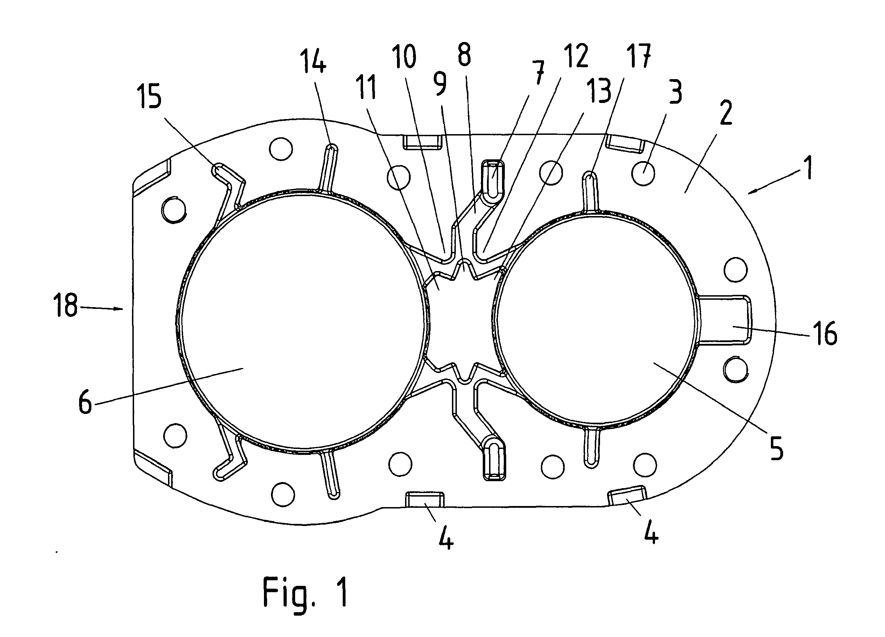

Figur 1 zeigt die dem Getriebegehäuse zugewandte Seite eines weiteren erfindungsgemäßen Lagerdeckels 1. Der Lagerdeckel 1 ist als Doppeldeckel ausgebildet, das heißt er ist zur Abdeckung zweier Lagerbohrungen vorgesehen.

Der Lagerdeckel 1 ist spiegelsymmetrisch bezüglicher einer Symmetrieebene ausgebildet, wobei die Symmetrieebene in der Figur 1 horizontal verläuft. Dies ermöglicht die Verwendung desselben Lagerdeckels 1 auf zwei Seiten eines Getriebegehäuses.

Hierzu wird die Flanschfläche 2 auf die Berandung der Lagerbohrung aufgesetzt, und es wird der Lagerdeckel 1 mittels Schrauben, die durch Bohrungen 3 geführt sind, befestigt.

Ausnehmungen 4 am Lagerdeckelrand erleichtern das nachträgliche Abheben des Lagerdeckels 1 zur Inspektion.

Der Lagerdeckel 1 weist eine erste Aussparung 5 und eine zweite Aussparung 6 auf, von denen jede eine Lagerbohrung abdeckt. Die Aussparungen sind als kuppelförmige Vertiefungen ausgebildet.

In die Flanschfläche 2 ist eine Ölnuten 8 eingebracht. Wegen der Spiegelsymmetrie ist eine ebensolche Ölnut auf der gegenüberliegenden Seite eingebracht.

Die Ölnut 8 beginnt an einer Ölaufnahme 7. Ein Vorsprung 9 bewirkt eine Verzweigung der Ölnut. Jeder der zwei Zweige mündet in eine Aussparung 5, 6. Im montierten Zustand ist der Lagerdeckel 1 wie in Figur 1 gezeigt ausgerichtet. Die Ölaufnahme 7 ist in Deckung gebracht mit einer Bohrung im Getriebegehäuse, in die wiederum das Leitrohr einer Ölfangvorrichtung befestigt ist. Somit ist ein Ölkreislauf gebildet zur Versorgung der Lager unter den Aussparungen 5 und 6: Die Ölfangvorrichtung weist ein Fangblech auf, welches Öl von einem Zahnrad aufnimmt und über das Leitrohr und die Bohrung in die Ölaufnahme 7 leitet. Von der Ölaufnahme 7 fließt das Öl aufgrund der Schwerkraft entlang der Ölnut 8 und wird durch den mittig in die Ölnut 8 hineinragenden Vorsprung 9 in zwei etwa gleichgroße Ölströme aufgeteilt. Über die Mündungen der Ölnut gelangt das Öl in die Aussparungen 5 und 6 und somit an die betreffenden Lager.

Im Bereich der Mündungen sind Abtropfhilfen 11 und 13 ausgebildet, deren Funktion am Spiegelbild der eben besprochenen Ölnut klar wird. Fließt nämlich Öl aus den Mündungen in die Aussparungen 5 oder 6, so wird ein Großteil des Öls entlang der Berandung der Aussparungen 5 und 6 kriechen. Die Abtropfhilfen im Spiegelbild der eben besprochenen Ölnut verhindern, dass dieses Öl in das Spiegelbild der Ölnut 8 gelangt. Vielmehr tropft dieses Öl an den Abtropfhilfen ab und wird zurück in die Aussparungen geleitet.

Die Mündungen weisen weiterhin Überlaufsperren 10 und 21 auf, deren Funktion am Spiegelbild der eben besprochenen Ölnut klar wird. Ist am Spiegelbild der Ölaufnahme 7 im Getriebegehäuse eine Bohrung angebracht, die ins Innere des Getriebes zurückführt, so kann Öl aus den Aussparungen 5 und 6 zurück ins Getriebeinnere fließen. Auch durch die Lager in die Aussparungen 5 und 6 gepumptes Öl kann auf diese Weise zurückfließen. Der Ölkreislauf ist somit geschlossen. Die Überlaufsperren 10 und 12 bewirken nun, dass ein Zurückfließen erst ab einer bestimmten Füllhöhe möglich ist. Die Neigung der Überlaufsperren 10 und 12 zur Aussparung 5 und 6 hin und die Anordnung relativ zu den Abtropfhilfen 11 und 13 bewirken zudem ein Zusammenspiel mit den Abtropfhilfen 11 und 13 bei der Zurückleitung von Kriechöl in die Aussparungen 5 und 6.

In die Flanschfläche 2 ist weiterhin mittig bezüglich der Spiegelsymmetrie eine Ölnut 16 zweiter Art eingebracht zum Anschluss einer Schmierölversorgung, wenn der Lagerdeckel 1 in einer aufrechten Position eingesetzt wird, bei der die Ölnut 16 nach oben zeigt.

In die Flanschfläche 2 sind weiterhin gerade ausgeführte Ölnuten 14 und 17 dritter Art eingebracht, die zum Anschluss einer Ölversorgungen aus einer Umlaufpumpe vorgesehen sind. Bei Bedarf werden in dem Getriebegehäuse entsprechende Bohrungen eingebracht, in die die Enden einer Ölverrohrung eingerollt werden.

Die Ölnuten 17 dritter Art sind als Ölüberlauf nutzbar, wenn der Lagerdeckel 1 in aufrechter Position eingesetzt wird.

Ölnuten 15 sind als Ölüberlauf einsetzbar, wenn der Lagerdeckel 1 in aufrechter Position eingesetzt wird. In diesem Fall wird die Aussparung 6 über die Aussparung 14 mit Schmieröl versorgt.

Der Lagerdeckel 1 weist eine Anlegekante 18 auf, die eine Kombination mit weiteren Lagerdeckeln in montierter Position ermöglicht.

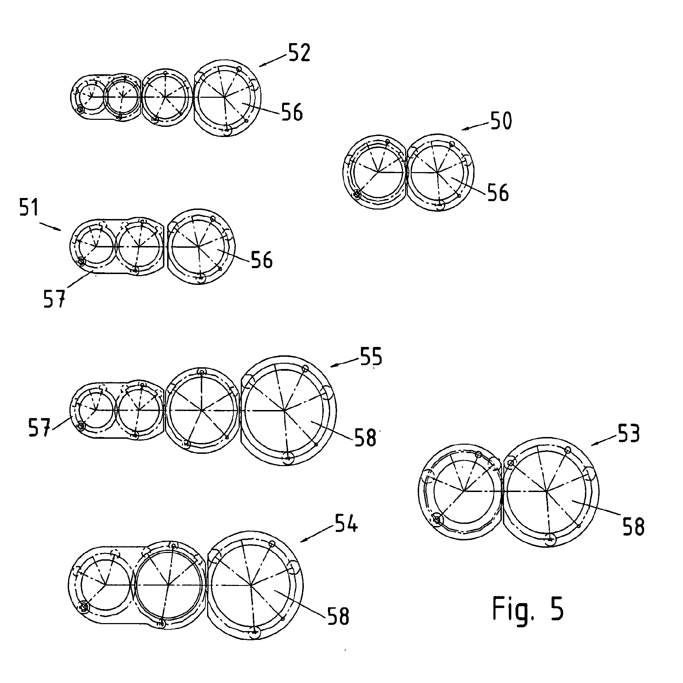

Figur 5 zeigt Kombinationsmöglichkeiten von Lagerdeckeln zur Bildung einer Baureihe von Getriebevarianten. Dargestellt sind die relative Anordnung der Lagerdeckel in montierter Position für Deckelkombinationsvarianten 50 bis 55, wie sie an einer Seite der Gehäuse der jeweiligen Getriebevarianten montiert sind.

Ein Lagerdeckel 56, ein Einzeldeckel, wird in den Deckelkombinationsvarianten 50, 51 und 52 eingesetzt, und zwar jeweils in der letzten Stufe und an der abtreibenden Welle, wenn bei den Getriebevarianten jeweils die Welle mit dem geringsten Durchmesser als eintreibende Welle gerechnet wird.

Ein Lagerdeckel 58, ein Einzeldeckel, wird in den Deckelkombinationsvarianten 53, 54 und 55 eingesetzt, und zwar jeweils in der letzten Stufe und an der abtreibenden Welle.

Ein Lagerdeckel 57, ein Doppeldeckel, wird in den Deckelkombinationsvarianten 51 und 55 eingesetzt, und zwar jeweils in der ersten Stufe und an der eintreibenden Welle.

Somit ist eine Baureihe von Getrieben geschaffen mit Wiederverwendung von Lagerdeckeln und somit mit reduzierter Teilevielfalt.

Die Wiederverwendbarkeit ist ermöglicht durch die Abstimmung der Lage der Befestigungsbohrlöcher 3, 32 und der Abmessung der Lagerbohrungen und der Abmessung der Achsabstände bei Getrieben mit unterschiedlichen Anzahlen von Getriebestufen. Die Ausbildung von Anlegekanten 18, 34 ermöglicht das Zusammenpassen der Lagerdeckel.

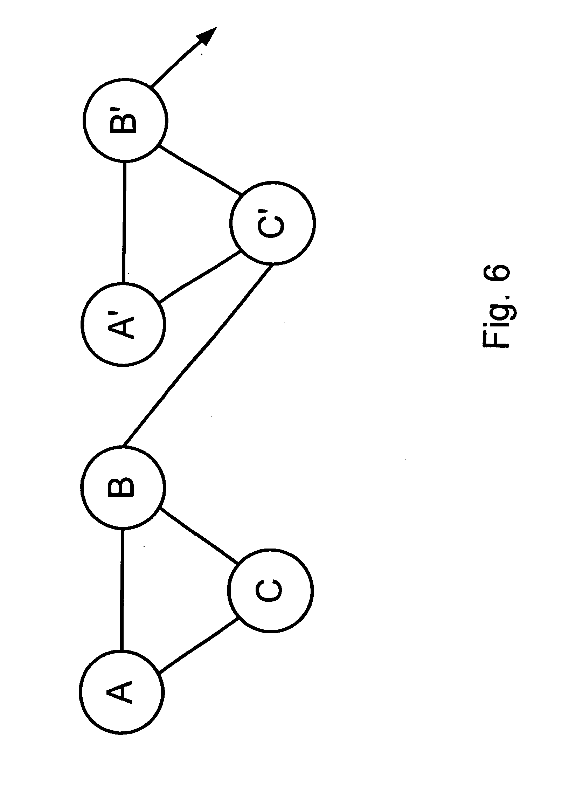

Die Wiederverwendbarkeit wird in Figur 6 schematisch repräsentiert. Jeder Knoten des abgebildeten Graphen repräsentiert eine Getriebevariante mit einer bestimmten Zahl von Getriebestufen und Achsabständen und Übersetzungszahlen.

Mit A und A' sind die einstufigen Varianten 50 und 53 aus Figur 5 bezeichnet, mit B und B' die zweistufigen Varianten 51 und 54, mit C und C' die dreistufigen Varianten 52 und 55.

Die Kanten repräsentieren die gemeinsame Verwendung mindestens eines Lagerdeckels. Es ist eine fortlaufende Wiederholung der Struktur erkennbar, angedeutet durch einen Pfeil. Es sind Tripletts erkennbar, die einen Einzeldeckel auf der abtreibenden Welle gemeinsam haben und Kanten zwischen Tripletts, die einen gemeinsamen Doppeldeckel kennzeichnen.

Jeder Knoten ist mit jedem Knoten über eine Folge von Kanten verbunden.

## Patentansprüche

1. Lagerdeckel (1),
umfassend eine erste Aussparung (5), eine zweite Aussparung (6) und eine Aufsetzfläche,
wobei die Aussparungen zur zumindest teilweisen Abdeckung jeweils einer Lagerbohrung eines Getriebes vorgesehen sind
und die Aufsetzfläche Bohrungen (3) zur Befestigung des Lagerdeckels an einem Getriebe aufweist,
**dadurch gekennzeichnet, dass**
die Aufsetzfläche eine Ölnut (8) erster Art aufweist,
die sich verzweigt
und mit einem ersten Ende in die erste Aussparung (5) mündet
und mit einem zweiten Ende in die zweite Aussparung (6) mündet.

2. Lagerdeckel nach Anspruch 1,
**gekennzeichnet durch**
eine Symmetrieebene, bezüglich derer der Lagerdeckel spiegelsymmetrisch ausgebildet ist, wobei die Symmetrieebene nicht **durch** die Ölnut verläuft
und/oder
jeder Mündungsbereich der Ölnut einen Abtropfvorsprung umfasst,
wobei die Abtropfvorsprünge jeweils von ihrem jeweiligen Spiegelbild weg weisen, insbesondere zur Vermeidung eines Rückkriechens von Schmieröl in das Ende der Ölnut und/oder
eine Ölnut zweiter Art vorgesehen ist, die in eine Aussparung mündet und **durch** welche die Symmetrieebene verläuft
und/oder
eine Ölnut dritter Art vorgesehen ist, die in eine Aussparung mündet und **durch** welche die Symmetrieebene nicht verläuft
und/oder
mindestens eine Aussparung zur teilweisen Abdeckung einer Lagerbohrung eine Öffnung aufweist, zur Durchführung einer Welle
und/oder
Mittel, insbesondere Sackbohrungen und eine Flanschfläche, vorgesehen sind zur Montage einer Rücklaufsperre
und/oder
Ölnuten und Bohrungen vorgesehen sind zum Anschluss der Ölausgänge einer Wellenendpumpe.

3. Getriebe mit Ölkreislauf,
wobei das Getriebe ein Gehäuse
und mindestens ein Zahnrad umfasst, das auf einer Welle befestigt ist,
wobei die Welle in einem Lager gelagert ist,
wobei das Lager in einer Lagerbohrung angeordnet ist
und durch einen Lagerdeckel nach einem der **Ansprüche 1 oder 2** verschlossen ist, **wobei**
eine Schmierölpumpe oder Mittel zum Auffangen von Schmieröl im Getriebeinneren vorgesehen sind,
im Gehäuse eine Bohrung vorgesehen ist zur Durchleitung von aufgefangenem Schmieröl and den Lagerdeckel,
im Lagerdeckel eine erste Ölnut vorgesehen ist, die mit der Gehäusewand einen Kanal bildet zur Durchleitung von Schmieröl aus der Bohrung an die Aussparung.

4. Getriebe nach **Anspruch 3,**
**dadurch gekennzeichnet, dass**
im Lagerdeckel eine zweite Ölnut vorgesehen ist,
und im Gehäuse eine zweite Bohrung vorgesehen ist,
wobei die zweite Ölnut die Aussparung mit der zweiten Bohrung zur Durchleitung von Schmieröl verbindet.

5. Getriebe nach **Anspruch 3 oder 4,**
**dadurch gekennzeichnet, dass**
die zweite Ölnut so angeordnet und ausgebildet ist, dass sie als Überlauf für das über die erste Ölnut zugeführte Schmieröl verwendbar ist.

6. Getriebe nach **einem der Ansprüche 3 bis 5,**
**dadurch gekennzeichnet, dass**
die zweite Ölnut so angeordnet und ausgebildet ist, dass sie in einer zweiten Bauform des Getriebes als Schmierölzuführung verwendbar ist.

7. Verfahren zur Schmierung eines Lagers in einem Getriebe, wobei das Getriebe einen Lagerdeckel nach einem der Ansprüche 1 oder 2 aufweist
**dadurch gekennzeichnet, dass**
i) vom Zahnrad weggeschleudertes Öl aufgefangen wird,
ii) durch eine Bohrung im Gehäuse in die Ölnut geleitet wird,
iii) durch die Ölnut in die erst und zweite Aussparung geleitet wird,
iv) über die Aussparung das Lager versorgt.

8. Verfahren nach *Anspruch 7,*
**dadurch gekennzeichnet, dass**
der Lagerdeckel spiegelsymmetrisch ausgeführt ist,
wobei das Spiegelbild der Ölnut als Überlauf der Lagerschmierung verwendet wird, indem überschüssiges Öl über die Ölnut und eine Bohrung im Gehäuse in den Getriebeinnenraum geleitet wird.

9. Baureihe von Getriebevarianten,
wobei jede Getriebevariante eine Anzahl von Stirnrad-Getriebestufen umfasst, deren Wellen in Lagern gelagert sind, die durch Lagerdeckel nach einem der Ansprüche 1 oder 2 zumindest teilweise abgedeckt sind,
**dadurch gekennzeichnet, dass**
ein Lagerdeckel der ersten Stirnrad-Getriebestufe einer ersten Getriebevariante montierbar ist an die erste Stirnrad-Getriebestufe einer zweiten Getriebevariante, wenn die Achsabstände der beiden Stirnrad-Getriebestufen übereinstimmen, insbesondere der Lagerdeckel der eintreibenden Welle der jeweils ersten Stirnrad-Getriebestufe,
wobei erster Getriebevariante und zweite Getriebevariante eine unterschiedliche Anzahl von Stirnrad-Getriebestufen aufweisen.

10. Baureihe nach **Anspruch 9,**
**dadurch gekennzeichnet, dass**
ein Lagerdeckel der letzten Stirnrad-Getriebestufe einer ersten Getriebevariante montierbar ist an die letzte Stirnrad-Getriebestufe einer zweiten Getriebevariante, wenn die Achsabstände der beiden Stirnrad-Getriebestufen übereinstimmen, insbesondere der Lagerdeckel der abtreibenden Welle.

11. Baureihe nach **Anspruch 9 oder 10,**
wobei jede Getriebevariante eine Anzahl von Stirnrad-Getriebestufen umfasst, deren Wellen in Lagern gelagert sind, die durch Lagerdeckel zumindest teilweise abgedeckt sind, **dadurch gekennzeichnet, dass**
unterschiedliche Getriebevarianten mit unterschiedlicher Anzahl von Stirnrad-Getriebestufen einen identischen Lagerdeckel aufweisen,
wobei die Getriebevarianten die Knoten eines Graphs definieren,
wobei je zwei Knoten durch eine Kante verbunden sind, wenn die zugehörigen Getriebevarianten mindestens einen identischen Lagerdeckel aufweisen,
wobei der Graph zusammenhängend ist.

12. Baureihe nach einem der **Ansprüche 9 bis 11,**
**dadurch gekennzeichnet, dass**
eine einstufige, eine zweistufige und eine dreistufige Getriebevariante einen identischen Lagerdeckel aufweisen, insbesondere den Lagerdeckel der abtreibenden Welle und/oder
eine zweistufige und eine dreistufige Getriebevariante einen identischen Lagerdeckel aufweisen, insbesondere einen Lagerdeckel der eintreibenden Welle, insbesondere wobei der Lagerdeckel zwei Wellenlager zumindest teilweise verschließt
und/oder
jeweils eine einstufige, eine zweistufige und eine dreistufige Getriebevariante einen identischen Lagerdeckel aufweisen, insbesondere den Lagerdeckel der abtreibenden Welle.

13. Baureihe nach einem der **Ansprüche 9 bis 12,**
**dadurch gekennzeichnet, dass**
jeweils eine zweistufige und eine dreistufige Getriebevariante einen identischen Lagerdeckel aufweisen, insbesondere einen Lagerdeckel der eintreibenden Welle, insbesondere wobei der Lagerdeckel zwei Wellenlager zumindest teilweise verschließt.

## Claims

1. Bearing cover (1),
comprising a first recess (5), a second recess (6) and a mounting surface,
the recesses being provided for at least partly covering respectively one bearing bore of a gearing and the mounting surface having bores (3) for fastening the bearing cover to a gearing,
**characterised in that**
the mounting surface has a first kind of oil groove (8), which branches
and with a first end opens into the first recess (5) and with a second end opens into the second recess (6).

2. Bearing cover according to Claim 1,
**characterised by**
a plane of symmetry, with respect to which the bearing cover is formed mirror-symmetrically,
where the plane of symmetry does not run through the oil groove
and/or
each mouth region of the oil groove comprises a drip-off projection,
where the drip-off projections each face away from their respective mirror image, in particular to avoid penetration of lubricating oil back into the end of the oil groove,
and/or
there is provided a second kind of oil groove, which opens into a recess and through which the plane of symmetry runs,
and/or
there is provided a third kind of oil groove, which opens into a recess and through which the plane of symmetry does not run,
and/or at least one recess for partly covering a bearing bore has an opening for passage of a shaft therethrough and/or
means, in particular blind bores and a flange surface, are provided for mounting a return barrier
and/or
oil grooves and bores are provided for connecting the oil outlets of a shaft end pump.

3. Gearing with oil circuit,
where the gearing comprises a housing
and at least one gear wheel fastened to a shaft,
where the shaft is mounted in a bearing,
where the bearing is arranged in a bearing bore and is closed off by a bearing cover according to either of Claims 1 and 2,
where
a lubricating oil pump or means for catching lubricating oil in the inside of the gearing are provided,
a bore is provided in the housing for leading through caught lubricating oil to the bearing cover,
a first oil groove is provided in the bearing cover, which groove forms with the housing wall a channel for leading through lubricating oil from the bore to the recess.

4. Gearing according to Claim 3,
**characterised in that**
a second oil groove is provided in the bearing cover, and a second bore is provided in the housing,
the second oil groove connecting the recess to the second bore for leading through lubricating oil.

5. Gearing according to Claim 3 or 4,
**characterised in that**
the second oil groove is so arranged and formed that it is usable as an overflow for the lubricating oil supplied via the first oil groove.

6. Gearing according to one of Claims 3 to 5, **characterised in that**
the second oil groove is so arranged and formed that it is usable in a second design of the gearing as a lubricating oil feed.

7. Method for lubricating a bearing in a gearing,
the gearing having a bearing cover according to either of Claims 1 and 2,
**characterised in that**
i) oil flung away by the gear wheel is caught,
ii) is led through a bore in the housing into the oil groove,
iii) is led through the oil groove into the first and second recess,
iv) supplies the bearing via the recess.

8. Method according to Claim 7,
**characterised in that**
the bearing cover is configured mirror-symmetrically,
the mirror image of the oil groove being used as an overflow of the bearing lubrication by leading excess oil via the oil groove and a bore in the housing into the interior of the gearing.

9. Series of gearing variants,
where each gearing variant comprises a number of spur-gear gearing stages, the shafts of which are mounted in bearings which are at least partly covered by bearing covers according to either of Claims 1 and 2, **characterised in that**
a bearing cover of the first spur-gear gearing stage of a first gearing variant is mountable on the first spur-gear gearing stage of a second gearing variant if the centre distances of the two spur-gear gearing stages correspond, in particular the bearing cover of the driving shaft of the respectively first spur-gear gearing stage,
where first gearing variant and second gearing variant have a different number of spur-gear gearing stages.

10. Series according to Claim 9,
**characterised in that**
a bearing cover of the last spur-gear gearing stage of a first gearing variant is mountable on the last spur-gear gearing stage of a second gearing variant if the centre distances of the two spur-gear gearing stages correspond, in particular the bearing cover of the driven shaft.

11. Series according to Claim 9 or 10,
where each gearing variant comprises a number of spur-gear gearing stages, the shafts of which are mounted in bearings which are at least partly covered by bearing covers,
**characterised in that**
different gearing variants with a different number of spur-gear gearing stages have an identical bearing cover, where the gearing variants define the nodes of a graph, where each two nodes are connected by one edge if the associated gearing variants have at least one identical bearing cover,
where the graph is coherent.

12. Series according to one of Claims 9 to 11, **characterised in that**
a one-stage, a two-stage and a three-stage gearing variant have an identical bearing cover, in particular the bearing cover of the driven shaft,
and/or
a two-stage and a three-stage gearing variant have an identical bearing cover, in particular a bearing cover of the driving shaft, in particular where the bearing cover at least partly closes off two shaft bearings,
and/or
respectively one one-stage, one two-stage and one three-stage gearing variant have an identical bearing cover, in particular the bearing cover of the driven shaft.

13. Series according to one of Claims 9 to 12, **characterised in that**
respectively one two-stage and one three-stage gearing variant have an identical bearing cover, in particular a bearing cover of the driving shaft, in particular where the bearing cover at least partly closes off two shaft bearings.

## Revendications

1. Chapeau de palier (1), comprenant un premier évidement (5), un deuxième évidement (6) et une surface de pose, sachant que les évidements sont prévus pour recouvrir chacun au moins partiellement un alésage de palier d'une transmission, et que la surface de pose présente des perçages (3) pour la fixation du chapeau de palier sur une transmission,
**caractérisé en ce que** la surface de pose présente une rainure à lubrifiant (8) de premier type, qui se ramifie et qui débouche par une première extrémité dans le premier évidement (5) et par une deuxième extrémité dans le deuxième évidement (6).

2. Chapeau de palier selon la revendication 1, **caractérisé par** un plan de symétrie, par rapport auquel le chapeau de palier est réalisé à symétrie spéculaire, sachant que le plan de symétrie ne passe pas par la rainure à lubrifiant,
et/ou que chaque région de débouché de la rainure à lubrifiant comprend une saillie d'égouttage, les saillies d'égouttage s'éloignant chacune de leur image spéculaire respective, en particulier pour éviter le reflux d'huile lubrifiante à l'extrémité de la rainure à lubrifiant,
et/ou qu'il est prévu une rainure à lubrifiant de deuxième type, qui débouche dans un évidement et par laquelle passe le plan de symétrie,
et/ou qu'il est prévu une rainure à lubrifiant de troisième type, qui débouche dans un évidement et par laquelle ne passe pas le plan de symétrie,
et/ou qu'au moins un évidement pour le recouvrement partiel d'un alésage de palier présente une ouverture pour le passage d'un arbre,
et/ou qu'il est prévu des moyens, notamment des perçages borgnes et une surface de bridage, pour le montage d'un dispositif antiretour,
et/ou qu'il est prévu des rainures à lubrifiant et des perçages pour le raccordement des sorties d'huile d'une pompe d'extrémité d'arbre.

3. Transmission avec circulation d'huile,
sachant que la transmission comprend un boîtier et au moins une roue dentée qui est fixée sur un arbre,
sachant que l'arbre est monté dans un palier,
sachant que le palier est disposé dans un alésage de palier et est fermé par un chapeau de palier selon l'une des revendications 1 ou 2,
sachant
qu'il est prévu une pompe à huile lubrifiante ou des moyens pour collecter l'huile lubrifiante à l'intérieur de la transmission,
qu'il est prévu dans le boîtier un perçage pour faire passer l'huile lubrifiante collectée dans le chapeau de palier,
qu'il est prévu dans le chapeau de palier une première rainure à lubrifiant, qui forme avec la paroi du boîtier un canal pour faire passer l'huile lubrifiante du perçage dans l'évidement.

4. Transmission selon la revendication 3, **caractérisée en ce qu'**il est prévu une deuxième rainure à lubrifiant dans le chapeau de palier et un deuxième perçage dans le boîtier, sachant que la deuxième rainure à lubrifiant relie l'évidement au deuxième perçage pour le passage de l'huile lubrifiante.

5. Transmission selon la revendication 3 ou 4, **caractérisée en ce que** la deuxième rainure à lubrifiant est disposée et conçue de telle sorte qu'elle peut être utilisée comme trop-plein pour l'huile lubrifiante alimentée via la première rainure à lubrifiant.

6. Transmission selon l'une des revendications 3 à 5, **caractérisée en ce que** la deuxième rainure à lubrifiant est disposée et conçue de telle sorte qu'elle peut être utilisée, dans une deuxième forme de construction de la transmission, comme alimentation en huile lubrifiante.

7. Procédé de lubrification d'un palier dans une transmission, sachant que la transmission présente un chapeau de palier selon l'une des revendications 1 ou 2, **caractérisé en ce que**
i) de l'huile expulsée de la roue dentée est recueillie,
ii) l'huile est dirigée dans la rainure à lubrifiant par un perçage dans le boîtier,
iii) l'huile est dirigée par la rainure à lubrifiant dans le premier évidement et dans le deuxième évidement,
iv) l'huile alimente le palier par l'intermédiaire des évidements.

8. Procédé selon la revendication 7, **caractérisé en ce que** le chapeau de palier est réalisé à symétrie spéculaire, sachant que l'image spéculaire de la rainure à lubrifiant est utilisée comme trop-plein de la lubrification du palier par le fait que l'huile excédentaire est dirigée à l'intérieur de la transmission par l'intermédiaire de la rainure à lubrifiant et d'un perçage dans le boîtier.

9. Gamme de fabrication de variantes de transmission, sachant que chaque variante de transmission comprend un certain nombre d'étages de transmission à engrenage droit dont les arbres sont montés dans des paliers qui sont recouverts au moins partiellement par des chapeaux de palier selon l'une des revendications 1 ou 2, **caractérisée en ce qu'**un chapeau de palier du premier étage de transmission à engrenage droit d'une première variante de transmission peut être monté sur le premier étage de transmission à engrenage droit d'une deuxième variante de transmission si les entraxes des deux étages de transmission à engrenage droit sont identiques, en particulier le chapeau de palier de l'arbre d'entrée du premier étage de transmission à engrenage droit respectif,
sachant que la première variante de transmission et la deuxième variante de transmission présentent un nombre différent d'étages de transmission à engrenage droit.

10. Gamme de fabrication selon la revendication 9, **caractérisée en ce qu'**un chapeau de palier du dernier étage de transmission à engrenage droit d'une première variante de transmission peut être monté sur le dernier étage de transmission à engrenage droit d'une deuxième variante de transmission si les entraxes des deux étages de transmission à engrenage droit sont identiques, en particulier le chapeau de palier de l'arbre de sortie.

11. Gamme de fabrication selon la revendication 9 ou 10, sachant que chaque variante de transmission comprend un certain nombre d'étages de transmission à engrenage droit dont les arbres sont montés dans des paliers qui sont recouverts au moins partiellement par des chapeaux de palier,
**caractérisée en ce que** des variantes de transmission différentes, avec des nombres différents d'étages de transmission à engrenage droit, présentent un chapeau de palier identique,
sachant que les variantes de transmission définissent les sommets d'un graphique, sachant que deux sommets sont chaque fois reliés par un côté si les variantes de transmission associées présentent au moins un chapeau de palier identique,
sachant que le graphique est continu.

12. Gamme de fabrication selon l'une des revendications 9 à 11, **caractérisée en ce qu'**une variante de transmission à un étage, une variante de transmission à deux étages et une variante de transmission à trois étages présentent un chapeau de palier identique, en particulier le chapeau de palier de l'arbre de sortie, et/ou une variante de transmission à deux étages et une variante de transmission à trois étages présentent un chapeau de palier identique, en particulier un chapeau de palier de l'arbre d'entrée, sachant notamment que le chapeau de palier ferme au moins partiellement deux paliers d'arbre,
et/ou une variante de transmission à un étage, une variante de transmission à deux étages et une variante de transmission à trois étages présentent respectivement un chapeau de palier identique, en particulier le chapeau de palier de l'arbre de sortie.

13. Gamme de fabrication selon l'une des revendications 9 à 12, **caractérisée en ce qu'**une variante de transmission à deux étages et une variante de transmission à trois étages présentent respectivement un chapeau de palier identique, en particulier un chapeau de palier de l'arbre d'entrée, sachant notamment que le chapeau de palier ferme au moins partiellement deux paliers d'arbre.
